# EUROPÄISCHE PATENTSCHRIFT

(11) **EP 1 232 923 B1**
(45) Veröffentlichungstag und Bekanntmachung des Hinweises auf die Patenterteilung: **26.01.2005**
(21) Anmeldenummer: 01126271.4
(22) Anmeldetag: 06.11.2001
(51) Int. Cl.: B60T 8/00

(54) **Verfahren zur Erkennung des Zustandes "Gas gegen Bremse"**
Method for detecting a simultaneous brake and accelerator pedal actuation
Procédé de détection de freinage et accélération simultanés

(30) Priorität: 15.02.2001 DE 10106927
(43) Veröffentlichungstag der Anmeldung: 21.08.2002
(73) Patentinhaber: WABCO GmbH & Co. OHG, 30432 Hannover (DE)
(72) Erfinder: Bensch, Uwe, 30519 Hannover (DE); Hinz, Wolfgang, 31515 Wunstorf (DE); Rosendahl, Hartmut, 30167 Hannover (DE)
(74) Vertreter: Schrödter, Manfred

(56) Entgegenhaltungen:
- DE-A- 3 728 709
- DE-A- 4 022 671
- DE-A- 19 544 445
- DE-A- 19 713 920
- DE-A- 19 920 851
- US-A- 5 439 429

## Beschreibung

Die Erfindung bezieht sich auf ein Verfahren gemäß dem Oberbegriff des Patentanspruchs 1.

Bei Straßenfahrzeugen, insbesondere Nutzfahrzeugen, kann es durch Störungen oder Ausfälle von elektronischen Steuergeräten oder durch Fehlreaktionen des Fahrers zu einem Betriebszustand kommen, in dem an den angetriebenen Rädern des Fahrzeugs sowohl ein motorseitiges Antriebsmoment als auch ein Bremsmoment durch Betätigung der Betriebsbremse wirkt.

Insbesondere bei stark motorisierten Fahrzeugen und in niedrigen Gängen ist es dann möglich, daß eine eingesteuerte Bremswirkung nicht ausreicht, um das Fahrzeug vor einem eventuellen Hindernis zum Stehen zu bringen. Hinzu kommt, daß durch eine an sich korrekte Reaktion eines ABS (Antiblockiersystems) die Bremswirkung noch vermindert werden kann.

Ein Abwürgen des Motors wird dabei möglicherweise durch die automatische Steuerung der Einspritzpumpe verhindert, welche zumindest die Leerlaufdrehzahl des Motors durch eine erhöhte Einspritzung aufrecht erhält.

Der Erfindung liegt die Aufgabe zugrunde, den oben beschriebenen gefährlichen Betriebszustand selbständig zu erkennen.

Daraufhin können dann von der Fahrzeugelektronik sofort automatisch geeignete Gegenmaßnahmen aktiviert werden, um eine Verlangsamung des Fahrzeugs im Rahmen physikalischer Grenzen zu ermöglichen bzw. zu erleichtern.

Die obengenannte Aufgabe wird durch die im Kennzeichen des Patentanspruchs 1 enthaltenen Merkmale gelöst. Die Unteransprüche enthalten zweckmäßige Weiterbildungen.

Ein besonderer Vorteil des erfindungsgemäßen Verfahrens liegt darin, daß der obengenannte Fahrzustand, bei dem an den angetriebenen Rädern gleichzeitig ein Bremsmoment durch Betätigung der Betriebsbremse und ein motorseitiges Antriebsmoment wirkt, erkannt werden kann, ohne daß zusätzliche Informationen von externen Systemen, wie z. B. das aktuelle Motormoment, die Kupplungsstellung oder der eingelegte Gang nötig sind. Das Verfahren benötigt auch keine zusätzlichen Sensoren, sondern kommt mit den normalerweise bei einem ABS/EBS (EBS = Elektronisches Bremssystem) enthaltenen Sensoren, insbesondere Raddrehzahl-Sensoren, aus.

Als Reaktion bzw. Gegenmaßnahme auf die Erkennung des Zustands "Gas gegen Bremse" kann z.B. die im Fahrzeug enthaltene ABS-Funktion modifiziert werden. Hierdurch kann in diesem besonderen Fall die Bremswirkung erhöht werden.

Es können auch besondere, zur Verminderung des Bremsdruckes an der Vorderachse (VA) führende Regelfunktionen des ABS abgeschaltet werden. Solche Funktionen sind z. B. in der DE-A 197 13 920 beschrieben.

Die Erfindung wird im folgenden anhand eines in einer Zeichnung dargestellten Ausführungsbeispiels näher erläutert.

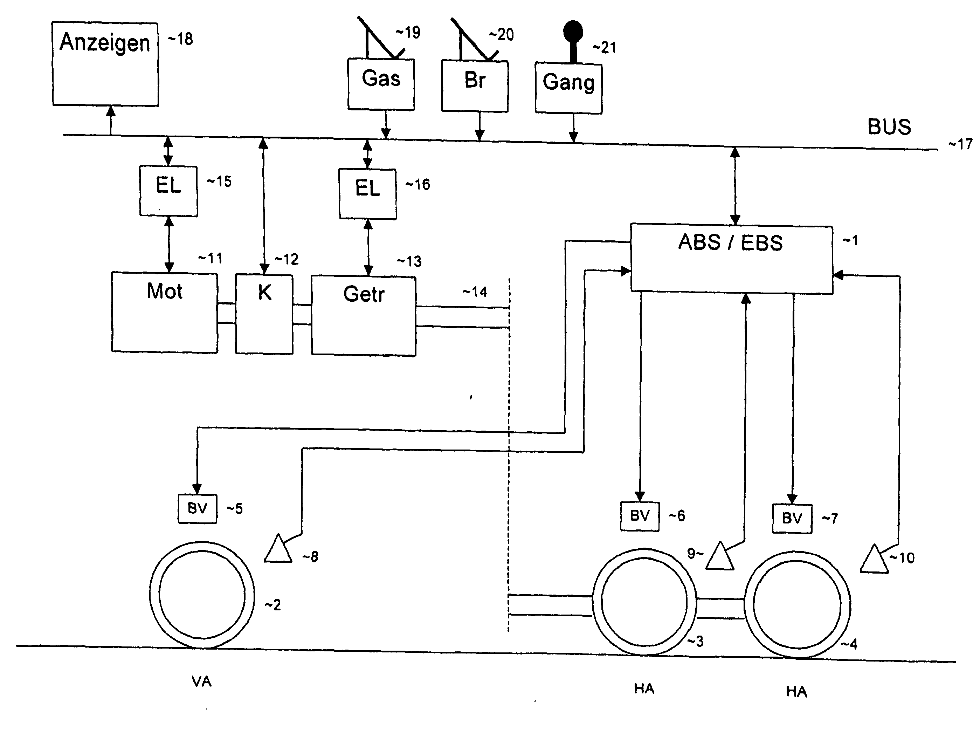

Die Zeichnung zeigt schematisch ein mechanisch/elektrisches Blockschaltbild eines dreiachsigen Nutzfahrzeuges mit ABS/EBS.

Das dargestellte Fahrzeug besitzt einen Motor (11), eine Kupplung (12) und ein Getriebe (13). Die Antriebskraft des Motors wird über eine Welle (14) an die Räder (3, 4) zweier Hinterachsen (HA) abgegeben. Die Vorderachse (VA) mit Rädern (2) ist nicht angetrieben.

Eine Anwendung des erfindungsgemäßen Verfahrens ist aber sinngemäß auch bei zweiachsigen Fahrzeugen und auch bei Personenkraftwagen (PKW) mit Frontantrieb möglich.

Das in der Zeichnung dargestellte Fahrzeug weist Elektroniken (15) und (16) zur Steuerung des Motors (11) und des Getriebes (13) auf. Weiter ist eine Elektronik (1) vorgesehen, die das ABS/EBS enthält. An diese Elektronik werden über entsprechende Leitungen die Drehzahl-Informationen aller Räder weitergeleitet. Die Drehzahlen werden über Raddrehzahlsensoren (8, 9, 10), welche an den Rädern (2, 3, 4) angeordnet sind, erfaßt.

In Abhängigkeit von der Bremsanforderung des Fahrers oder eines externen Systems, beispielsweise eines Abstands-Regel-Tempomaten, sowie vom Bewegungszustand der Räder werden in an sich bekannter Weise Bremsventile (5, 6, 7) angesteuert, und damit die vorgegebene Bremswirkung reguliert. Über in den Bremsventilen (5, 6, 7) enthaltene Drucksensoren oder andere Verfahren können Informationen über den jeweiligen tatsächlichen Bremsdruck an die ABS/EBS-Elektronik (1) zurückgemeldet werden.

Die Funktion einer derartigen ABS/EBS-Elektronik ist grundsätzlich bekannt und wird deshalb hier nicht näher erläutert (siehe z. B. DE-A-40 22 671).

Die genannten Elektroniken (15, 16) sowie (1) und die Kupplung (12) sind über elektrische Verbindungsleitungen an einen Fahrzeugbus (17) angeschlossen. Hierdurch ist eine Kommunikation zwischen den einzelnen Elektroniken möglich. An den Bus (17) sind weiter angeschlossen: eine Anzeige-Einheit (18) die Betriebs-Anzeigen und Schalter enthält, ein Gaspedal (19), ein Bremspedal (20) sowie ein Geber einer Gangschaltung (21).

Das erfindungsgemäße Verfahren funktioniert wie folgt.

In der ABS/EBS-Elektronik (1) wird laufend überprüft, ob die mittlere Hinterachs-Geschwindigkeit, d. h. die Geschwindigkeiten der angetriebenen Räder (3, 4) sowie der gegenüberliegenden Räder der Hinterachsen für eine vorgegebene Zeit um einen vorgegebenen Geschwindigkeitsbetrag oberhalb der mittleren Vorderachs-Geschwindigkeit, also der Geschwindigkeit des Rades (2) sowie des gegenüberliegenden Rades liegt. Dabei hat sich durch Versuche herausgestellt, daß die vorgegebene Zeit vorteilhaft in einem Bereich von 200 bis 400 Millisekunden liegen sollte. Weiter hat sich als vorteilhaft herausgestellt, daß der vorgegebene Geschwindigkeitsbetrag größer oder gleich 2,0 km/h sein sollte.

Weiter wird durch die ABS/EBS-Elektronik (1) geprüft, ob der Bremsdruck in den Hinterachsbremsen größer als ein vorgegebener Bremsdruck ist. Dabei hat sich ein vorgegebener Bremsdruck zwischen 5 und 6 bar als günstig herausgestellt.

Der Bremsdruck kann entweder durch in den Bremsventilen (6, 7) enthaltene Drucksensoren gemessen werden, oder durch geeignete Verfahren elektronisch abgeschätzt werden.

Schließlich wird durch die ABS/EBS-Elektronik (1) noch geprüft, ob der Betrag der mittleren Hinterachs-Beschleunigung der Räder (3, 4) sowie der gegenüberliegenden Räder in einem vorgegebenen Beschleunigungsband liegt. Dabei sollte das vorgegebene Beschleunigungsband etwa zwischen - 0,2 g und + 0,2 g liegen.

Mit den obengenannten Prüfungen wird zum einen erkannt, daß der im Betrieb "Gas gegen Bremse" vorliegende schiebende Betriebszustand, bei dem die Räder der Antriebsachse einen positiven Schlupf gegenüber der gebremsten Vorderachse aufweisen, vorliegt. Weiter ist für den zu erkennenden Zustand wichtig, daß eine Panikbremsung bzw. Vollbremsung vorliegt, und demzufolge der Bremsdruck höher als ein vorgegebener Grenzwert ist. Schließlich läßt sich durch das Eingrenzen der mittleren Hinterachs-Beschleunigungen in ein vorgegebenes Beschleunigungsband ausschließen, daß eine ABS-Regelung der Hinterachsen vorliegt, was gegen das Vorliegen des zu erkennenden Zustandes sprechen würde.

Sobald der Zustand "Gas gegen Bremse" durch das erfindungsgemäße Verfahren erkannt worden ist, kann beispielsweise zur Verbesserung der Bremswirkung des Fahrzeugs ein im Fahrzeug enthaltenes Antiblockiersystem (ABS) abgeschaltet werden.

Alternativ können vorzugsweise auch spezielle Regelfunktionen des ABS zur Verminderung des Bremsdruckes an der Vorderachse abgeschaltet oder modifiziert werden, wodurch sich die Bremswirkung des Fahrzeugs ebenfalls erhöhen läßt.

Durch die genannten Maßnahmen wird es dem Fahrer erleichtert, im obenbeschriebenen gestörten Betriebszustand das Fahrzeug im Rahmen der physikalischen Grenzen bis zum Stillstand herunterzubremsen.

## Patentansprüche

1. Verfahren zur Erkennung des Zustandes "Gas gegen Bremse" bei einem Straßenfahrzeug, insbesondere Nutzfahrzeug, mit mindestens zwei Achsen, wovon mindestens eine Achse angetrieben ist, und das mit einem Antiblockiersystem (ABS) und/oder einem elektronischen Bremssystem (EBS) ausgerüstet ist,
**dadurch gekennzeichnet, daß** von der ABS/EBS-Elektronik (1) geprüft wird, ob
a) die mittlere Geschwindigkeit der Räder (3,4) der angetriebenen Achse (HA) für eine vorgegebene Zeit um einen vorgegebenen Geschwindigkeitsbetrag oberhalb der mittleren Geschwindigkeit der Räder (2) der nicht angetriebenen Achse (VA) liegt, und
b) der Bremsdruck an den Rädern (3,4) der angetriebenen Achse (HA) größer als ein vorgegebener Bremsdruck ist und
c) der Betrag der mittleren Beschleunigung der Räder (3,4) der angetriebenen Achse (HA) in einem vorgegebenen Beschleunigungsband liegt.

2. Verfahren nach Anspruch 1, **dadurch gekennzeichnet, daß** die vorgegebene Zeit etwa 300 Millisekunden beträgt.

3. Verfahren nach Anspruch 1 bis 2, **dadurch gekennzeichnet, daß** der vorgegebene Geschwindigkeitsbetrag etwa 2 km/h beträgt.

4. Verfahren nach Anspruch 1 bis 3, **dadurch gekennzeichnet, daß** der vorgegebene Bremsdruck etwa 5,5 bar beträgt.

5. Verfahren nach Anspruch 1 bis 4, **dadurch gekennzeichnet, daß** das vorgegebene Beschleunigungsband etwa - 0,2 g bis + 0,2 g beträgt.

6. Verfahren nach Anspruch 1 bis 5, **dadurch gekennzeichnet, daß** bei Erkennung des Zustandes "Gas gegen Bremse" ein im Fahrzeug enthaltenes Antiblockiersystem (ABS) abgeschaltet wird.

7. Verfahren nach Anspruch 1 bis 5, **dadurch gekennzeichnet, daß** bei Erkennung des Zustandes "Gas gegen Bremse" spezielle Regelfunktionen des ABS zur Verminderung des Bremsdrucks an der nicht angetriebenen Achse (VA) des Fahrzeugs abgeschaltet oder modifiziert werden.

## Claims

1. Method of recognising a "gas versus brake" state in a road vehicle, especially a commercial vehicle, having at least two axles, of which at least one is driven, and which is fitted with an antilocking system (ABS) and/or an electronic braking system (EBS),
**characterised in that** the ABS/EBS electronics system (1) determines whether
a) the average speed of the wheels (3, 4) of the driven axle (HA) is, for a predetermined time, above the average speed of the wheels (2) of the non-driven axle (VA) by a predetermined speed amount, and
b) the brake pressure at the wheels (3, 4) of the driven axle (HA) is greater than a predetermined brake pressure and
c) the rate of the average acceleration of the wheels (3, 4) of the driven axle (HA) lies within a predetermined acceleration band.

2. Method according to claim 1, **characterised in that** the predetermined time is about 300 milliseconds.

3. Method according to claim 1 or 2, **characterised in that** the predetermined speed amount is about 2 km/h.

4. Method according to any one of claims 1 to 3, **characterised in that** the predetermined brake pressure is about 5.5 bar.

5. Method according to any one of claims 1 to 4, **characterised in that** the predetermined acceleration band is approximately from -0.2 g to +0.2 g.

6. Method according to any one of claims 1 to 5, **characterised in that** on recognition of the "gas versus brake" state, an antilocking system (ABS) contained in the vehicle is switched off.

7. Method according to any one of claims 1 to 5, **characterised in that** on recognition of the "gas versus brake" state, specific control functions of the ABS for reducing the brake pressure at the non-driven axle (VA) of the vehicle are switched off or modified.

## Revendications

1. Procédé pour identifier l'état "accélération contre freinage" dans un véhicule routier, notamment un véhicule utilitaire, comportant au moins deux essieux, dont au moins l'un d'eux est un essieu moteur et qui est équipé d'un système d'antiblocage (ABS) et/ou d'un système de freinage électronique (EBS),
**caractérisé en ce que** le système électronique ABS/EBS (1) teste si
d) la vitesse moyenne des roues (3,4) de l'essieu moteur (HA) est, pendant un intervalle de temps prédéterminé, supérieure d'une valeur de vitesse prédéterminée à la vitesse réelle des roues (2) de l'essieu non moteur (VA), et
e) la pression de freinage au niveau des roues (3,4) de l'essieu moteur (HA) est supérieure à une pression de freinage prédéterminée, et
f) la valeur absolue de l'accélération moyenne des roues (3,4) de l'essieu moteur (HA) se situe dans une gamme prédéterminée d'accélérations.

2. Procédé selon la revendication 1, **caractérisé en ce que** l'intervalle de temps prédéterminé est égal à environ 300 millisecondes.

3. Procédé selon les revendications 1 et 2, **caractérisé en ce que** la valeur de vitesse prédéterminée est égale à environ 2 km/h.

4. Procédé selon les revendications 1 à 3, **caractérisé en ce que** la pression de freinage prédéterminée est égale à environ 5,5 bars.

5. Procédé selon les revendications 1 à 4, **caractérisé en ce que** la gamme prédéterminée d'accélérations s'étend approximativement de - 0,2 g à + 0,2 g.

6. Procédé selon les revendications 1 à 5, **caractérisé en ce que** dans le cas de l'identification de l'état "accélération contre freinage", un système d'antiblocage (ABS) contenu dans le véhicule est débranché.

7. Procédé selon les revendications 1 à 5, **caractérisé en ce que** dans le cas de l'identification de l'état "accélération contre freinage", des fonctions particulières de régulation du système ABS sont débranchées ou modifiées pour réduire la pression de freinage au niveau de l'essieu non moteur (VA) du véhicule.
